# EUROPEAN PATENT SPECIFICATION

(11) **EP 4 282 905 B1**
(45) Date of publication and mention of the grant of the patent: **28.08.2024**
(21) Application number: 23165177.9
(22) Date of filing: 29.03.2023
(51) Int. Cl.: C08J 3/24, B05D 5/12, C08J 7/04, C08K 3/04

(54) **PREPARATION PROCESS OF GRAPHENE DISPERSION IN PDMS WITH THE SIMULTANEOUS USE OF ULTRASOUND AND VACUUM**
HERSTELLUNGSVERFAHREN FÜR GRAPHENDISPERSION IN PDMS UNTER GLEICHZEITIGER VERWENDUNG VON ULTRASCHALL UND VAKUUM
PROCÉDÉ DE PRÉPARATION D'UNE DISPERSION DE GRAPHÈNE DANS DU PDMS PAR UTILISATION SIMULTANÉE D'ULTRASONS ET DE VIDE

(30) Priority: 24.05.2022 SI 202200077
(43) Date of publication of application: 29.11.2023
(73) Proprietor: Institut "Jozef Stefan", 1000 Ljubljana (SI); Univerza v Ljubljani, Fakulteta za strojnistvo, 1000 Ljubijana (SI)
(72) Inventor: Mrzel, Ales, 1000 Ljubljana (SI); Vella, Daniele, 1000 Ljubljana (SI); Jezersek, Matija, 1235 Radomlje (SI)
(74) Representative: Jersan, Tatjana

(56) References cited:
- CN-A- 107 029 565
- CN-A- 114 854 197
- US-A1- 2013 224 452

## Description

The subject of the invention is a process for preparing a dispersion of graphene and/or its derivatives in PDMS by simultaneous application of ultrasound and vacuum. The dispersion of graphene and/or its derivatives in PDMS is further used to prepare a PDMS/graphene and/or graphene derivatives composite. The invention belongs to the field of organic and composite polymer chemistry. The process of the invention makes it possible to prepare large quantities of well-dispersed graphene and/or its derivatives based on noble metals in PDMS.

The elastomeric polymer material PDMS (polymethylsiloxane) is safe for biological use, can be prepared as thin layers by spinning onto various substrates, including uneven ones - as described in Rogers, J. A. O., Schueller, J. A., Whitesides, G. M.: Appl. Phys. Lett. 1998,195, 172, and has a high coefficient of linear thermal expansion - as described in Müller A., Wapler M. C., Wallrabe U. : Soft Matter. 2019, 15, 779-784. These properties make it extremely suitable for applications where thermal expansion is very important, such as optoacoustic transducers - as described in Lee T., Baac, H.W., Li Q., Guo, L.J.: Adv Optical Mater, 2018, 6 (24), 1800491 and photothermal actuators - as described in Grigoriadis, C., Haase, N., Butt, H.-J., Müllen, K., Floudas, G.: Adv.Mater. 2010, 22, 1403. PDMS is a transparent silicone, so a suitable dye or pigment must be added for effective light absorption for e.g., laser-generated ultrasonic applications. In particular, various light-absorbing carbon materials have been used, such as carbon nanotubes - as described in Li, J., Lan, X., Lei, S., Ou-Yang, J., Yang, X., Zhu. B.: Carbon, 2019, 145, 112-118.: Chen, Z., Wu, Y., Yang, Y., Li, J., Xie, B., Li, X., Lei, S., Ou-Yang, J., Yang, X., Zhou, Q., Zhu, B.:Nano Energy, 2018, 46, 314-321 : Noimark, S., Colchester, R.J., Blackburn, B.J., Zhang, E.Z., Alles, E.J., Ourselin, S., Beard, P.C., Papakonstantinou, I., Parkin, I.P., Desjardins A.E. : Adv Funct Mater, 2016, 26 (46) , 8390-8396., carbon black for candles - as described in Chang, W.Y., Huang, W., Kim, J., Li, S., Jiang X. : Appl Phys Lett, 2015, 107 (16) 161903-161905., carbon nanofibres - as described in Hsieh, B.Y., Kim, J., Zhu, J., Li, S., Zhang, X , Jiang X.: Appl Phys Lett, 2015, 106 (2) , 021902, carbon black - as described in Hsieh, B.Y., Chen, S.L., Ling, T., Guo, L.J., Li P.C.: Optic Express, 2012, 20 (2), 1588-1596., reduced graphene oxide - as described in Lalwani, G., Cai, X., Nie, L., Wang, L.V., Sitharaman, B.: Photoacoustics, 2013,1 (3), 62-67: Moon, H., Kumar, D., Kim, H., Sim, C., Chang, J.H., Kim, J.M., Kim, H., Lim D.K. : ACS Nano, 2015, 9 (3), 2711-2719 and graphene - as described in Kou, H., Zhang, L., Tan, Q.,Liu, G., Dong, H., Zhang W., Xiong, J. : Sci Rep, 2019, 9, 3916.

Graphene is a solid, well-conducting substance composed of pure carbon in which atoms are positioned in a pattern of regular hexagons, similar to graphite but one atom thick. Materials consisting of nanoparticles of noble metals (Au, Pt, Pd, Ru) attached to the surface of graphene are derivatives of graphene based on noble metals. Several methods have been used to prepare noble metal-based graphene derivatives, such as physical vapour deposition, atomic layer deposition (ADL) and various chemical synthesis approaches - as described in Jiawei, L., Qinglang, M., Zhiqi H., Guigao, L., Zhang, H.: Advanced Materials 2019, 31. 1800696.

Several methods for the preparation of graphene-based PDMS composite material are described. Graphene and n-hexane were added to the PDMS to reduce the viscosity, and the hexane was completely evaporated at the boiling point of hexane (69°C) using ultrasound. A curing agent was then added at room temperature and, after crosslinking, the final PDMS/graphene composite material was obtained - as described in Li B., Zhang, Y., Li, T., Yu, H., Guo, Q., Hu, M., Yang J.: Macromol. Mater. Eng. 2022, 2100868-2100878. The graphene was dispersed in ethyl acetate by ultrasonication and the ethyl acetate dispersion of PDMS was added to the resulting dispersion. With vigorous stirring, the ethyl acetate was completely evaporated at 70°C. After cooling the polymer to room temperature, a curing agent and an inhibitor were added to prevent rapid curing of the composite in 3D printing - as described in Wang, Z., Gao, W., Zhang, Q., Zheng, K., Xu, J., Xu, W. Shang, E. Jiang, J. Zhang, J. Liu, Y.: ACS Applied Materials & Interfaces 2019, 11 (1), 1344-1352. THF (tetrahydrofuran) was added separately to PDMS and graphene, and both mixtures were dispersed in ultrasound. The two dispersions were combined, the resulting mixture was further dispersed in the ultrasound and a curing reagent was then added. After removal of the THF from the dispersion on a heating plate at a temperature of 50° to 60° C by rotating at 1100 to 1200 rpm, a PDMS/graphene composite is formed - as described in patent KR101406085B1. In the preparation of a functional sponge consisting of a PDMS/graphene composite useful for separating oil or non-polar organic solvent from water, a diluted suspension of the PDMS-graphene solvent solution by ultrasonication was first prepared. This was followed by the application of the graphene-PDMS mixture to the surfaces by solvent evaporation and cross-linking and curing on PDMS. Then followed removal of the deposited composite from the surface and drying of the sample, yielding a functional sponge composed of graphene and PDMS - as described in patent CN106084276 A 2019. A conductive elastic PDMS/graphene composite film with a thickness of about 200 µm was prepared by mixing graphene with PDMS. First, a mixture of PDMS and a curing agent was prepared and mixed using a centrifugal mixer. The PDMS/graphene paste was further dispersed by ultrasonication. The PDMS/graphene paste used to prepare the conductive film contained up to 40 % graphene by weight in the polymer composite - as described in Zhang, X.M., Yang, X.L. Wang, K.Y.: J Mater Sci: Mater Electron, 2019, 30, 19319-19324. The graphite microparticles were exfoliated in the molten thermoplastic polymer phase due to repeated shear deformation of the molten polymer phase, so that distributions of single and multilayered layers of graphene nanoparticles, less than 50 nanometres thick along the c-axis direction, were formed in the molten polymer phase - as described in patent EP3603956A1. Diluted PDMS was first applied to the substrate with solvent without any curing agent by the rotation method. By spraying a solution of light-absorbing carbon and metal nanoparticles, the latter were deposited on the surface of the uncured PDMS film. After the nanoparticles were sprayed onto the surface of the uncured PDMS film, the next layer of PDMS was deposited and a curing agent was added to the PDMS in this layer - as described in U.S. Patent 20210047486.

The preparation of composite materials based on graphene homogeneously dispersed in PDMS poses a technological problem due to the high viscosity of PDMS and the aggregation of graphene, resulting in inhomogeneous graphene-based PDMS composite materials with inferior functional properties. Another technological problem is also the preparation of composite materials based on graphene and PDMS, which would allow the preparation of thin films of PDMS/graphene composite material with high optical absorption and light penetration depth comparable to the film thickness.

Several different techniques and processes for the preparation of dispersions of graphene and/or its derivatives in PDMS for the preparation of composite PDMS polymer materials based on graphene and/or its derivatives are known and described, but no process for the preparation of a dispersion of graphene and/or its derivatives in PDMS by the simultaneous application of ultrasound and vacuum has been described so far. The object and goal of the invention is to provide a process for preparing a homogeneous dispersion of graphene and/or its derivatives in PDMS, which is further used for the preparation of PDMS composite materials based on graphene and/or its derivatives, also suitable for the preparation of thin films of PDMS/graphene and/or graphene derivatives composite material with high optical absorption and penetration depth of light comparable to the thickness of the film.

The object of the invention is solved by a process for preparing a dispersion of graphene and/or its derivatives in a PDMS polymer according to independent patent claims.

### Description of invention

The invention will be described by way of embodiments and figures which show:
Figure 1: Schematic representation of a process for preparing a dispersion of graphene and/or its derivatives in PDMS by the simultaneous application of ultrasound and vacuum, and for preparing PDMS composite materials based on graphene and/or its derivatives based on this dispersion.

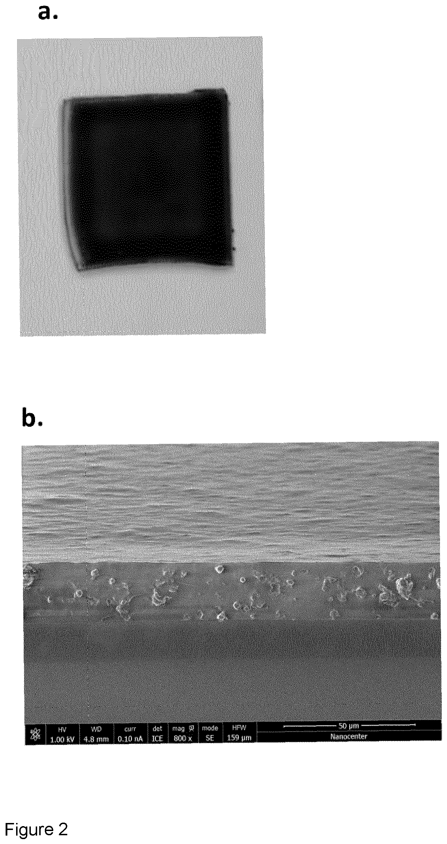

Figure 2: a.) The photo shows a PDMS/graphene composite prepared from a dispersion of graphene in PDMS obtained by the simultaneous application of ultrasound and vacuum. b.) An SEM image of a cross-section of a conductive thin film of a PDMS/graphene composite obtained from a dispersion of graphene and PDMS prepared by the simultaneous application of ultrasound and vacuum, taken with a scanning electron microscope (SEM, JEOL JSM-7600F), did not reveal nanoflakes or clusters of graphene.

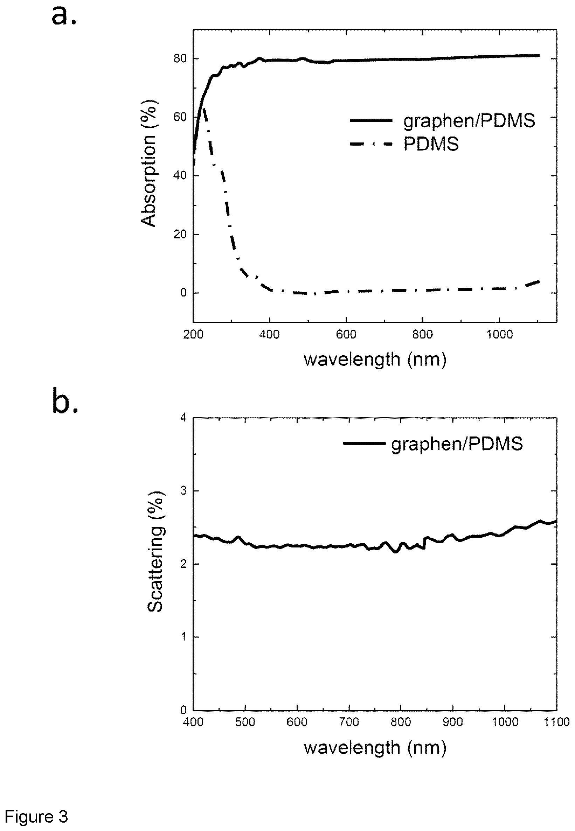

Figure 3: To check the optical quality of the PDMD/graphene thin film, the absorption and the amount of scattered light/differential scattering was measured.
   a) Absorption spectre of the PDMS/graphene composite with 1.1 percent by weight of graphene (full line), applied at 3000 RPM onto a PDMS substrate with a thickness of 15 micrometres by a spinning method. Absorption was assessed after the measurement of reflectance (R) and transmittance (T), A = 1-T + R. The absorption of PDMS without graphene is indicated by the dashed line. The absorption of the composite reaches 80% of the absorbed light relative to PDMS and is independent on the wavelength of the light and almost free of background scattering.
   b) Scattering of light of the PDMS/graphene composite with 1.1 percent by weight of graphene, applied at 3000 RPM onto a PDMS substrate with a thickness of 15 micrometres by the spinning method with respect to the substrate, measured in the reflection geometry and integrated sphere. The light scattering component is only about 2%, confirming the good optical quality of the thin film.

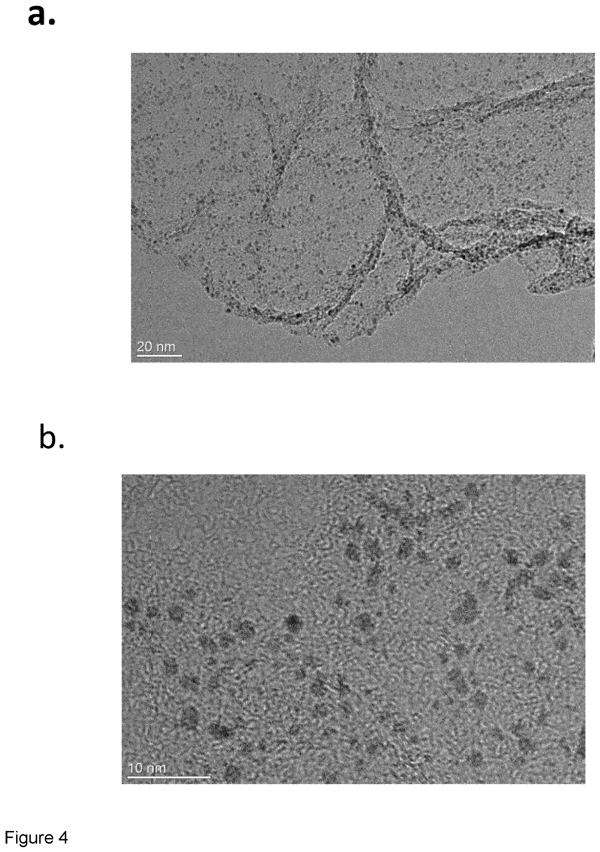

Figure 4 a) is a TEM image of graphene decorated with platinum nanoparticles having a diameter of a few nanometres, taken by a transmission electron microscope (TEM, JEOL 2100 FX). b) is a TEM image of graphene decorated with platinum nanoparticles having a diameter of a few nanometres, taken by a transmission electron microscope (TEM, JEOL 2100 FX).

The process according to the invention allows preparation of more homogeneous dispersions of graphene and/or its derivatives, whereby the composite materials prepared from said dispersion are particularly suitable for the preparation of thin films of PDMS/graphene and/or graphene derivatives composite material with high optical absorption and penetration depth of light comparable to the thickness of the film. Said thin films of composite material are preferably used for robust optoacoustic lenses.

As the process is carried out using ultrasound and vacuum simultaneously, the process can be carried out at lower temperatures, thus avoiding possible thermal degradation of the polymer chains and/or graphene. The technical problem described herein is solved according to the invention by a process for preparing a dispersion of graphene and/or its derivatives in PDMS by simultaneous application of ultrasound and vacuum. In the context of the present application, the term graphene derivatives refers to chemically modified graphenes, preferably to chemically modified graphene derivatives based on noble metals (graphene decorated with nanoparticles of noble metals). The noble metals are selected from gold (Au), platinum (Pt), ruthenium (Ru) or palladium (Pd).

The PDMS polymer is preferably an uncured PDMS polymer.

The process for preparing dispersions of graphene and/or its derivatives in the PDMS polymer includes the following steps:
A) separate preparation of PDMS and graphene and/or its derivatives, wherein the PDMS and graphene and/or its derivatives are diluted with organic solvents to give a dispersion of graphene and/or its derivatives in the organic solvent and the PDMS swollen with the organic solvent;
B) adding a dispersion of graphene and/or its derivatives in an organic solvent to the PDMS swollen with an organic solvent or PDMS to produce a mixture of PDMS, solvent and graphene and/or its derivatives;
C) treating the mixture of step B) by simultaneous application of ultrasound and vacuum, wherein the organic solvent is evaporated and a homogeneous dispersion of PDMS and graphene and/or its derivatives is obtained.

To prepare composite PDMS polymeric materials based on graphene and/or its derivatives from the dispersion of step C, the process further comprises adding a curing agent to the dispersion of step C, crosslinking the dispersion of graphene and/or its derivatives in the uncured PDMS and mixing.

Suitable organic solvents are solvents having a solubility parameter between 7.3-9.5 cal ^{1/2} cm^{-3/2} and include acyclic and cyclic hydrocarbons (pentane, hexane, heptane, cyclohexane), aromatic hydrocarbons (xylenes, toluene, benzene), halogenated compounds (chloroform, trichloroethylene) and ethers (diethyl ether, dimethoxyethane, tetrahydrofuran). The boiling points of the solvents used to dilute the PDMS and graphene and/or its derivatives are less than 180°C, preferably between 30°C and 80°C.

Graphene and/or its derivatives are first dispersed in an organic solvent and the mixture is then added to the PDMS already diluted (swollen) with the organic solvent. The organic solvent is evaporated simultaneously using ultrasound and vacuum, while the temperature of the preparation of the dispersion of graphene and/or graphene derivatives in the PDMS is maintained at temperatures below the boiling points of the organic solvents used to reduce the viscosity of the uncured PDMS, namely at ultrasonic bath temperatures between 1°C and 70°C, preferably between 20°C and 40°C. The sonication is carried out in a solvent, preferably water, which has been cooled during the process by the addition of ice or cold water, thereby preventing possible thermal degradation of the polymer chains and/or graphene. The process for preparing a dispersion of graphene and/or derivatives thereof in PDMS is carried out at 0.1 to 2 weight per cent preferably between 0.5 and 1.5 weight per cent, of graphene and/or derivatives thereof, at undepressure of between 100 mPa and 100 kPa, preferably at vacuum of between 100 kPa and 1 kPa, and at ultrasound frequencies above 20 kHz, preferably in the range of between 37 kHz and 80 kHz, including 37 kHz and 80 kHz.

The process can also be used to prepare dispersions of other graphene derivatives obtained by chemical modification of graphene and 2D materials based on transition metal dichalcogenides.

The PDMS/graphene and/or graphene derivatives composite is obtained by adding a curing agent to the dispersion of PDMS and graphene and/or graphene derivatives from step C and heating this mixture. The mixture of PDMS and graphene and/or graphene derivatives with the added curing agent can be deposited on various substrates such as cured PDMS, glass, silicon, quartz glass, also by the spinning method, and then crosslinked by heating at temperatures above 20°C, preferably at temperatures above 80°C and below 240°C. Thin films of PDMS/graphene and/or graphene derivatives composite materials are obtained.

### Embodiment

### Example 1

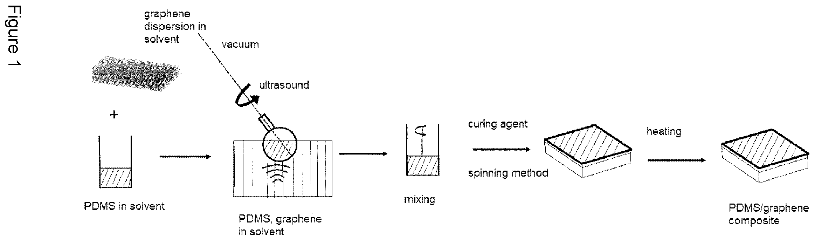

In a glass reagent bottle No. 1, 1 g of uncured PDMS (SYLIGARD 184 Silicone Elastomer base) was diluted with 1 ml of n-hexane (Carbo Erba, ASC Regent). In a second glass reagent bottle, 11 mg of graphene (Single layer graphene, ASC Materials) was added to 3 ml of hexane. The mixture of graphene and hexane was dispersed for 5 min in an Elmasonic P 30H ultrasonic bath (frequency 80 Hz, power 20%), then the diluted PDMS from the reagent bottle No. 1 was added and stirred. The resulting mixture (PDMS + hexane + graphene) was transferred completely into a glass flask with a ground glass joint. The glass flask was placed on a Cabreta 4011 rotavapor so that it was approximately one quarter immersed in water in an ultrasonic bath. While the flask was rotating, 80 Hz ultrasound (20% power) was applied for two hours under low vacuum conditions of the water pump, maintaining the temperature of the water bath below 30°C by adding ice. At a final volume of 2 ml, the mixture was stirred with a magnetic stirrer for two hours. Before adding the curing agent (SYLIGARD 184 Silicone Elastomer Curing Agent) at a ratio of 1 to 10 by weight of PDFM, the mixture was further dispersed in an ultrasonic bath (80 kHz, 20% power) at 20°C for 15 minutes. After the addition of the curing agent, the mixture was stirred for 30 minutes with a magnetic stirrer. The resulting material was deposited onto different substrates (glass, quartz, silicon, cured PDMS) by the spinning method between 3000 and 6000 rpm (spinning method machine, Laurell Model WS-650 MZ -23NPP). Figure 1 is a schematic representation of the process. After deposition, the substrate with the material applied thereon was degassed at low vacuum for a few minutes and then heated in an oven at 80°C for 1 hour. A thin film of PDMS/graphene composite material with a thickness of 15 micrometres was obtained on the substrate. A schematic representation of the process used to obtain the thin film of PDMS/graphene composite is shown in Figure 1.

### Example 2

10 mg of K₂PtCl₄ (Sigma Aldrich, 99.9 %) was dissolved in 20 ml of distilled water and 10 mg of graphene (Single layer graphene, ASC Materials) was added. The mixture was dispersed in an Elmasonic P 30 H ultrasonic bath for one hour at 37 kHz, 60% power and then centrifuged with a Mikro 200 Hettich microcentrifuge, 10000 rpm for 10 min.

The precipitate was washed three times with distilled water and once with technical grade ethanol and dried at 40°C. 10.8 grams of graphene decorated with platinum nanoparticles was obtained.

In a glass reagent bottle No. 1, 1 g of uncured PDMS (SYLIGARD 184 Silicone Elastomer base) was diluted with 1 ml of hexane (Carbo Erba, ASC Regent). A second glass reagent bottle contained 7 mg of graphene decorated with platinum nanoparticles, to which 3 ml of hexane was added. The mixture was dispersed for 5 min in an Elmasonic P 30H ultrasonic bath (frequency 80 Hz, power 400 W, 20%), then the diluted PDMS from the reagent bottle No. 1 was added and stirred. The resulting mixture (PDMS + hexane + graphene decorated with platinum nanoparticles) was transferred completely into a glass flask with a ground glass joint. The glass flask was placed on a Cabreta 4011 rotavapor so that it was approximately one quarter immersed in water in an ultrasonic bath. While the flask was rotating, 80 Hz ultrasound (20% power) was applied for two hours under low vacuum conditions of the water pump, maintaining the temperature of the water bath below 30 degrees by adding ice. At a final volume of 2 ml, the mixture was further stirred with a magnetic stirrer for two hours. Before adding the curing agent (SYLIGARD 184 Silicone Elastomer Curing Agent) at a ratio of 1 to 10 by weight based of PDFM, the mixture was dispersed in an ultrasonic bath (80 kHz, 20% power) at a temperature of water bath of 20°C for 15 minutes. After the addition of the curing agent, the mixture was further stirred for 30 minutes with a magnetic stirrer. The resulting material was deposited onto different substrates (glass, quartz, polymerised PDMS) by the spinning method between 3000 and 6000 rpm (rotation method machine, Laurell Model WS-650 MZ-23NPP). The substrates with the material applied thereon was degassed at low vacuum for a few minutes and then heated in an oven at 80°C for 1 hour. A thin film of the composite material PDMS/graphene decorated with platinum nanoparticles with a thickness of 20 micrometres was obtained on the substrate.

## Claims

1. A process for preparing a dispersion of graphene in polymethylsiloxane (PDMS) by simultaneous application of ultrasound and vacuum, **characterized in that** the process comprises the following steps:
A) separate preparation of PDMS and graphene and/or its derivatives, wherein the PDMS and graphene and/or its derivatives are diluted with organic solvents to give a dispersion of graphene and/or its derivatives in the organic solvent and the PDMS swollen with the organic solvent;
B) adding a dispersion of graphene and/or its derivatives in an organic solvent to the PDMS swollen with an organic solvent to produce a mixture of PDMS, solvent and graphene and/or its derivatives;
C) treating the mixture of step B) by simultaneous application of ultrasound and vacuum, wherein the organic solvent is evaporated to obtain a dispersion of PDMS and graphene and/or its derivatives,
wherein the graphene derivatives are chemically modified graphenes, preferably chemically modified graphene derivatives based on noble metals.

2. The process according to claim 1, **characterised in that** the weight proportion of graphene and/or its derivatives is between 0.1 and 2 % by weight based on PDMS, preferably between 0.5 and 1.5 % by weight.

3. The process according to claim 1, **characterised in that** the process is carried out at ultrasonic bath temperatures between 1°C and 70°C, preferably at temperatures between 20°C and 40°C.

4. The process according to claim 1, **characterised in that** the process is carried out at vacuum between 100 mPa and 100 kPa, preferably at vacuum between 100 kPa and 1 kPa.

5. The process according to claim 1, **characterised in that** the process is carried out at ultrasound frequencies above 20 kHz, preferably in the range between 37 and 80 kHz, including 37 and 80 kHz.

6. The process according to claim 1, **characterized in that** the organic solvents are the solvents having a solubility parameter between 7.3-9.5 cal ^{1/2} cm^{-3/2}, and the boiling point of the organic solvents is below 180°C, preferably between 30° and 80°C.

7. The process according to claim 1, **characterized in that** the noble metals are selected from gold (Au), platinum (Pt), ruthenium (Ru) or palladium (Pd).

8. The process according to claim 1, **characterized in that** the PDMS is an uncured PDMS.

9. The process for preparing composite PDMS polymeric materials based on graphene and/or its derivatives from the dispersion prepared according to claims 1 to 8, **characterized in that** the dispersion of graphene and/or its derivatives in PDMS from step C) is crosslinked by a curing agent.

## Patentansprüche

1. Verfahren zur Herstellung einer Dispersion von Graphen in Polymethylsiloxan (PDMS) durch gleichzeitige Anwendung von Ultraschall und Vakuum, **dadurch gekennzeichnet, dass** das Verfahren die folgenden Schritte umfasst:
A) separate Herstellung von PDMS und Graphen und/oder Derivaten davon, wobei das PDMS und Graphen und/oder Derivate davon mit organischen Lösungsmitteln verdünnt werden, zum Erhalt einer Dispersion von Graphen und/oder Derivaten davon im organischen Lösungsmittel und dem mit dem organischen Lösungsmittel gequollenen PDMS;
B) Zugeben einer Dispersion von Graphen und/oder Derivaten davon in einem organischen Lösungsmittel zum PDMS, das mit einem organischen Lösungsmittel gequollen ist, um eine Mischung aus PDMS, Lösungsmittel und Graphen und/oder Derivaten davon herzustellen;
C) Behandeln der Mischung aus Schritt B) durch gleichzeitige Anwendung von Ultraschall und Vakuum, wobei das organische Lösungsmittel verdampft wird, um eine Dispersion von PDMS und Graphen und/oder Derivaten davon zu erhalten,
wobei die Graphenderivate chemisch modifizierte Graphene, vorzugsweise chemisch modifizierte Graphenderivate auf Basis von Edelmetallen sind.

2. Verfahren nach Anspruch 1, **dadurch gekennzeichnet, dass** der Gewichtsanteil an Graphen und/oder Derivaten davon zwischen 0,1 und 2 Gew.-%, bezogen auf PDMS, vorzugsweise zwischen 0,5 und 1,5 Gew.-% liegt.

3. Verfahren nach Anspruch 1, **dadurch gekennzeichnet, dass** das Verfahren bei Ultraschallbadtemperaturen zwischen 1°C und 70°C, vorzugsweise bei Temperaturen zwischen 20°C und 40°C durchgeführt wird.

4. Verfahren nach Anspruch 1, **dadurch gekennzeichnet, dass** das Verfahren im Vakuum zwischen 100 kPa und 100 kPa, vorzugsweise im Vakuum zwischen 100 kPa und 1 kPa durchgeführt wird.

5. Verfahren nach Anspruch 1, **dadurch gekennzeichnet, dass** das Verfahren bei Ultraschallfrequenzen oberhalb von 20 kHz, vorzugsweise im Bereich zwischen 37 und 80 kHz, einschließlich 37 und 80 kHz, durchgeführt wird.

6. Verfahren nach Anspruch 1, **dadurch gekennzeichnet, dass** die organischen Lösungsmittel Lösungsmittel mit einem Löslichkeitsparameter zwischen 7,3-9,5 cal^{1/2} cm^{-3/2} sind und der Siedepunkt der organischen Lösungsmittel unter 180°C, vorzugsweise zwischen 30° und 80°C, liegt.

7. Verfahren nach Anspruch 1, **dadurch gekennzeichnet, dass** die Edelmetalle aus Gold (Au), Platin (Pt), Ruthenium (Ru) oder Palladium (Pd) ausgewählt sind.

8. Verfahren nach Anspruch 1, **dadurch gekennzeichnet, dass** das PDMS ein ungehärtetes PDMS ist.

9. Verfahren zur Herstellung von Verbund-PDMS-Polymermaterialien auf Basis von Graphen und/oder Derivaten davon aus der nach den Ansprüchen 1 bis 8 hergestellten Dispersion, **dadurch gekennzeichnet, dass** die Dispersion von Graphen und/oder Derivaten davon in PDMS aus Schritt C) durch ein Härtungsmittel vernetzt wird.

## Revendications

1. Procédé de préparation d'une dispersion de graphène dans du polyméthylsiloxane (PDMS) par application simultanée d'ultrasons et de vide, **caractérisé en ce que** le procédé comprend les étapes suivantes :
A) la préparation séparée de PDMS et de graphène et/ou de ses dérivés, le PDMS et le graphène et/ou ses dérivés étant dilués avec des solvants organiques pour donner une dispersion de graphène et/ou de ses dérivés dans le solvant organique et le PDMS gonflé avec le solvant organique ;
B) l'ajout d'une dispersion de graphène et/ou de ses dérivés dans un solvant organique au PDMS gonflé avec un solvant organique pour produire un mélange de PDMS, de solvant et de graphène et/ou de ses dérivés ;
C) le traitement du mélange de l'étape B) par application simultanée d'ultrasons et de vide, dans lequel le solvant organique est évaporé pour obtenir une dispersion de PDMS et de graphène et/ou de ses dérivés,
dans lequel les dérivés de graphène sont des graphènes chimiquement modifiés, de préférence des dérivés de graphène chimiquement modifiés à base de métaux nobles.

2. Procédé selon la revendication 1, **caractérisé en ce que** la proportion en poids de graphène et/ou de ses dérivés est comprise entre 0,1 et 2 % en poids par rapport au PDMS, de préférence entre 0,5 et 1,5 % en poids.

3. Procédé selon la revendication 1, **caractérisé en ce que** le procédé est mis en oeuvre à des températures de bains ultrasoniques comprises entre 1 °C et 70 °C, de préférence à des températures comprises entre 20 °C et 40 °C.

4. Procédé selon la revendication 1, **caractérisé en ce que** le procédé est mis en oeuvre sous vide entre 100 mPa et 100 kPa, de préférence sous vide entre 100 kPa et 1 kPa.

5. Procédé selon la revendication 1, **caractérisé en ce que** le procédé est réalisé à des fréquences ultrasonores supérieures à 20 kHz, de préférence comprises entre 37 et 80 kHz, y compris 37 et 80 kHz.

6. Procédé selon la revendication 1, **caractérisé en ce que** les solvants organiques sont les solvants ayant un paramètre de solubilité compris entre 7,3 et 9,5 cal^{1/2} cm^{-3/2}, et le point d'ébullition des solvants organiques est inférieur à 180 °C, de préférence entre 30 ° et 80 °C.

7. Procédé selon la revendication 1, **caractérisé en ce que** les métaux nobles sont choisis parmi l'or (Au), le platine (Pt), le ruthénium (Ru) ou le palladium (Pd).

8. Procédé selon la revendication 1, **caractérisé en ce que** le PDMS est un PDMS non durci.

9. Procédé de préparation de matériaux polymères PDMS composites à base de graphène et/ou de ses dérivés à partir de la dispersion préparée selon les revendications 1 à 8, **caractérisé en ce que** la dispersion de graphène et/ou de ses dérivés dans le PDMS de l'étape C) est réticulée par un agent de durcissement.
